# EUROPEAN PATENT APPLICATION

(11) **EP 3 299 397 A1**
(43) Date of publication of application: **28.03.2018**
(21) Application number: 16189821.8
(22) Date of filing: 21.09.2016
(51) Int. Cl.: C08F 6/00, B01D 3/06

(54) **METHOD FOR SEPARATING HYDROCARBONS FROM POLYMER**

(71) Applicant: Borealis AG, 1220 Vienna (AT)
(72) Inventor: Kanellopoulos, Vasileios, 4040 Linz (AT); Al-haj Ali, Mohammad, 00700 Helsinki (FI); Krallis, Apostolos, FI02600 Espoo (FI); Desimpel, Jan, 9170 Sint Gillis Waas (BE); Deboel, Tom, 3200 Aarschot (BE); Talal, Abdoulahi, 2100 Dejrne (BE); Van Zele, Ann, 1568 Haven (BE)
(74) Representative: Salminen, Hannu

(57) **Abstract**

The invention is a flash separator for separating an olefin copolymer mixture from volatile gases. The flash separator can be used with a solution or high pressure process. The object is to increase the mass transfer of volatile gases from the polymer melt.

## Description

### Field of the invention

The present invention is directed to a flash separator for separating an olefin copolymer from volatile gases and the process for separating the polymer from the gases. The flash separator can be used in a solution polymerisation process where the olefin is copolymerised in the presence of a polymerisation catalyst or high pressure process where the olefin is polymerised by means of a free radical process. The object is to increase the mass transfer of volatile gases from the viscous polymer melt.

### Background of the invention

Polyolefins are produced by several different conventional technologies. Typical temperatures are from 50 to 350°C and pressures vary from 30 to 3000 bars. The polyolefins are produced at a temperature in which the polymer is dissolved in a liquid or supercritical mixture of unreacted monomer, unreacted comonomers and optional solvents.

The polymerisation process includes one or more polymerisation reactors. Suitable reactors include unstirred or stirred, spherical, cylindrical and tank-like vessels and recirculating loop reactors and tubular reactors. Such reactors typically include injection points for monomer, comonomer, solvent, catalyst and optional other reactants and additives and withdrawal points for reaction mixtures. In addition the reactors may include heating or cooling means.

The separation of unreacted dissolved monomer(s), comonomer(s) and possible solvents from the reaction mixture comprising a polymer melt is commonly carried out in flash separator(s), typically carried out in one or more separation stages. In the solution process, a stream of a reaction solution withdrawn from the polymerisation reactor is passed to the flash separator where ethylene with or without comonomer (i.e., propylene, 1-butene, 1-hexene, 1-octene or combination of comonomers) and hydrocarbon solvent are separated from the polymer melt.

In high pressure processes, for making LDPE, the pressure of the reaction mixture at the reactor outlet, is decreased from its operating value of about 1000 to 3000 bar to a value of 100 to 300 bar via the operation of the exit let-down valve. The reaction mixture expansion caused by the let-down valve, results in a temperature increase of the outlet reaction stream (i.e., reverse Joule-Thompson effect). Subsequently, the reaction mixture is fed into a flash separator, also called high pressure separator where the monomer/comonomer/polymer ternary mixture is split into a polymer stream, which is a polymer rich liquid phase, and a gaseous stream, which is a monomer(s)-rich gas phase. The polymer stream coming from the bottom of the flash separator is fed to a further flash separator for further removal of residual monomer(s). In the second flash separator, the pressure is further reduced. The gas stream, containing low molecular weight waxes, leaving the second flash separator (i.e., off gas) is fed to the primary compressor while the liquid bottom polymer stream is directed to the extruder for pelletisation.

When operating flash separators with in viscous polymer solutions one faces a problem with respect to the achievement of the highest possible separation efficiency of the components with minimum material entrainment. The smaller the size of the polymer droplets entering the flash separator, the more enhanced is the mass transfer rate but then the risk of carry-over of the droplets increases. Entrained polymer (waxes, small size droplets, etc.) which follows the recycled gaseous stream out of the flash separator will increase fouling of down-stream heat exchangers, thus reducing the overall heat transfer rate. Moreover, deposition of entrained polymers in the pipes and compressors increases cleaning cost and maintenance time and, in extreme cases, can cause piping blockages and premature failure of mechanical components.

The object of the invention is to improve the separation of hydrocarbons from a viscous compound, such as olefin copolymer. Especially, the object of the invention is to improve the separation of hydrocarbons having a relatively high molecular weight (and which therefore are less volatile), such as the comonomer(s) used in the polymerisation. It is relatively easy to separate small-size molecules as ethylene; however, the separation of bulky molecules, such as comonomers, typical examples of which are 1-octene and vinyl acrylate, from viscous olefin copolymer melt is challenging.

One object of the present invention is to increase the mass transfer of volatile gases by increasing the surface area of the droplets in the high pressure separator. Another object of this invention is a process with increased mass transfer area to efficiently separate volatile gases from the highly-viscous polymer melt.

Yet another object of the invention is to reduce the amount of droplets carry-over, i.e. the amount of entrained olefin copolymer carry-over into the gaseous stream.

The flash separator according to the present invention has an inlet f having means for distribution of the reaction mixture, which is a viscous polymer melt. Such an inlet can increase the separation efficiency with minimum risk of droplets carry over. The invention further has advantages of:
- Minimum droplets entrainment combined with high separation efficiency closer to equilibrium - ideal separation
- Less risk of heat exchangers, filters and compressors blockage.
- Smooth operation of the flash separator.
- Less effort in cleaning and maintenance of the knock out drums in the downstream processing unit.

The object of the invention is to improve separation of large molecules from the viscous compound, i.e. the reaction mixture. The removal of unreacted ethylene from ethylene homopolymer is efficient enough since ethylene has a relative high mass transport rate.

### Summary of the invention

As seen from one aspect, the present invention provides a flash separator comprising
a. an inlet located at the upper part of the flash separator for feeding a reaction mixture comprising an olefin copolymer and a gaseous mixture of monomer and at least one unreacted comonomer,
b. a first outlet at the lower part of the flash separator, and
c. a second outlet at the top of the flash separator,
wherein the inlet has an enhanced mass transfer surface area that is increased with at least 25% compared to a simple straight pipe having the same diameter and the same length as the inlet.

As seen from another aspect the present invention provides a process for separating hydrocarbons from a reaction solution comprising a polymer and said hydrocarbons comprising the steps of passing the reaction solution into the flash separator as defined above; withdrawing a first solution comprising the majority of the polymer through the first outlet; and withdrawing a second solution comprising mainly hydrocarbons through the second outlet.

Flash separators are typically operated at a pressure of at least 1 bar. Mass transfer surface area is defined in the subsequent text.

### Detailed description

### High pressure process

The olefin copolymer can be produced in a high pressure polymerisation process, where an olefin, typically ethylene, is copolymerised by free-radical polymerisation process. The process comprises a primary and a high-pressure compressor, a preheater and a polymerization reactor, typically an autoclave reactor (e.g. a continuous stirred tank reactor) or a tubular reactor. Comonomers and chain transfer agent are added prior the high-pressure compressor. For starting the polymerisation reactions initiators are added after the preheater and along the reactor for starting and maintaining the highly exothermic polymerization reaction.

In the tubular reactor the highly exothermic polymerization reaction is carried out under supercritical conditions, e.g. between 1000 and 3500 bar, preferably between 1800 and 3400 bar, and especially preferably between 2000 and 3300 bar.

The tubular reactor comprises at least one cooling jacket. Typically the tubular reactor tubes have a length between 500 and 4000 m, preferably between 1500 and 3000 m, more preferably between 2000 and 2500 m. The operating temperature in the reactor varies between 100 and 350°C, the temperature forming a profile along the length of the reactor. In particular the temperature is between 165 and 340°C, more particularly between 165 and 320°C.

The autoclave reactor is operating above critical pressure, in particular between 500 and 3000 bar, specifically between 1000 and 2500 bar, more specifically between 1200 and 2000 bar. The operating temperature is between 100 and 340°C.

Typical comonomers are octadiene (OD), vinyl acetate (EVA), meth acrylates, in particular methyl acrylate (EMA), ethyl acrylate (EEA), butyl acrylate (EBA), methyl methacrylate (EMMA), acrylic acid (EAA), methacrylic acid (EMAA), vinyl tri methoxy silane (VTMS), vinyl tri ethoxy silane (VTES), glycidyl methacrylate (GMA), maleic anhydride (MAH), carbon monoxide, acrylamide, gamma-metha acryloxy propyl tri methoxy silane and / or gamma-metha acryloxy propyl tri ethoxy silane.

Typical chain transfer agents are propionaldehyde (PA), propylene, propane, methyl ethyl ketone and isopropanol and / or hydrogen.

The stream of the reaction mixture withdrawn from the polymerisation reactor, the reaction solution stream, is usually throttled to a pressure between 100 and 300 bar, preferably 220 to 270 bar and passed to the flash separator, also called high pressure separator.

### Solution polymerisation

The olefin copolymer can be produced in solution polymerisation process. In solution polymerisation process the monomer is polymerised at a temperature in which the polymer is dissolved in the solvent mixture which is present in the process.

The process includes one or more polymerisation reactors. Suitable reactors include unstirred or stirred, spherical, cylindrical and tank-like vessels and recirculating loop reactors and tubular reactors. Such reactors typically include feeding points for monomer, comonomer, solvent, catalyst and optional other reactants and additives and withdrawal points for polymer solutions. In addition the reactors may include heating or cooling means.

Typically the solution polymerisation process is a high temperature solution polymerisation process, using a polymerisation temperature of greater than 100°C. Preferably the polymerisation temperature is at least 110°C, more preferably at least 150°C. The polymerisation temperature can be up to 250°C. The pressure in the solution polymerisation process is preferably in a range of from 30 to 200 bar, preferably from 50 to 150 bar and more preferably from 60 to 150 bar.

The monomer is an olefin monomer. More preferably the olefin monomer is selected from the group consisting of ethylene, propylene and 1-butene, most suitably ethylene.

Typically also a comonomer is used in the polymerisation. When the monomer is an olefin monomer as disclosed above, then the comonomer is different from the olefin monomer and is selected from the group consisting of linear and cyclic olefins and diolefins having from 2 to 12 carbon atoms and the mixtures thereof. Typical comonomer is an alfa-olefin, different from the monomer, and is selected from the group consisting of linear alpha-olefins having from 2 to 12 carbon atoms and the mixtures thereof, suitably 4 to 10 carbon atoms, most suitably of 1-hexene and 1-octene.

The polymerisation is typically conducted in the presence of an olefin polymerisation catalyst. Such olefin polymerisation catalysts comprise a transition metal compound, preferably a metal compound of group 4, such as a compound of titanium, zirconium or hafnium.

The transition metal compound may be a halide of the transition metal, such as a trihalide or a tetrahalide. Typically the transition metal halide is a titanium halide, such as titanium trichloride or titanium tetrachloride.

The transition metal compound may also be a transition metal alkyl or transition metal alkoxide compound. Such compounds are often contacted with a chlorinating compound, such as an alkyl chloride.

The transition metal compound may be combined with a group 2 metal halide, such as magnesium halide, like magnesium dichloride, and/or with a group 13 metal halide, such as aluminium or boron halide, like aluminium trichloride. Such catalysts are well known in the art and are referred to as Ziegler-Natta catalysts. A Ziegler-Natta catalyst is typically used in combination with a cocatalyst, such as an aluminium alkyl.

The transition metal compound may also be a compound comprising an organic ligand having a cyclopentadienyl structure, such as cyclopentadienyl, fluorenyl or indenyl. Such organic ligands may also bear substituents. The transition metal may have one or two such organic ligands, which optionally are bridged, and two or three other ligands, such as alkyl, aryl or halide. Such catalysts are also well known in the art and are referred to as metallocene catalysts.

In solution polymerisation process a solvent is also present. The solvent is in liquid or supercritical state in the polymerisation conditions. The solvent is typically and preferably a hydrocarbon solvent. The liquid hydrocarbon solvent used is preferably a C₅-₁₂-hydrocarbon which may be unsubstituted or substituted by C₁-₄ alkyl group such as pentane, methyl pentane, hexane, heptane, octane, cyclohexane, methylcyclohexane and hydrogenated naphtha. More preferably unsubstituted C₆-₁₀-hydrocarbon solvents are used.

Also other components may be added into the reactor. It is known to feed hydrogen into the reactor for controlling the molecular weight of the polymer formed during the polymerisation. Also the use of different antifouling compounds is known in the art. In addition different kinds of activity boosters or activity retarders may be used for controlling the activity of the catalyst.

Typically the content of the olefin copolymer in the reaction mixture comprising the solvent, the olefin copolymer and the unreacted monomer and comonomer is from 10 to 50 wt%, preferably from 10 to 40 wt%, more preferably from 10 to 35 wt%.

### Reaction mixture

The reaction mixture stream is the feed stream to the flash separator. The reaction mixture may be the product stream from the polymerisation reactor, as discussed above. The reaction mixture stream then typically has the polymer content, composition temperature and pressure as disclosed in the section above.

The reaction mixture comprises an olefin copolymer, and at least one unreacted comonomer, suitably the olefin copolymer and other components as defined below. Suitably, the reaction mixture also comprises a solvent.

The reaction mixture stream is preferably heated prior to its entry to the flash separator. The heating may be achieved by passing the solution through one or more flash heaters, or through one or more jacketed pipes, or through a heat exchanger located upstream of the flash vessel. The reaction mixture is preheated before entering the flash separator to enhance the separation of different hydrocarbons, i.e. monomer, comonomer and the solvent. The pressure of the reaction mixture is suitably reduced before being fed to the flash separator.

In one embodiment a static mixer is placed upstream of the flash separator. The static mixer improves homogeneity of the reaction mixture.

### Flash separator

The gases are removed from the polymer solution in one or more flash stages which are conducted in one or more flash separators. In the first flash stage, the pressure is reduced and thereby the volatile gases evaporate from the reaction mixture. It is also possible to increase the temperature of the reaction mixture upstream of the flash separator for further enhancing the evaporation of gases.

The flash separator is a vertical vessel. It preferably has a generally cylindrical shape. Thereby the flash separator has a section which has approximately a circular cross-section. Preferably the flash separator has a cylindrical section which has a shape of a circular cylinder. In addition to the cylindrical section the flash separator may have additional sections, such as a bottom section, which may be conical, and a top section which may be hemispherical. Alternatively, the flash separator may also have a generally conical shape. The volume of the flash separator is suitably at least 5 m³, more suitably at least 8 m³.

The temperature in the flash separator is typically from 100 to 400°C, suitably 130 to 300°C, more suitably 160 to 275°C. The temperature should be sufficiently high to keep the viscosity of the solution at a suitable level, but less than the temperature where the polymer is degraded. The pressure in the flash separator is typically from 1 to 500 bar, suitably 2 to 400 bar, most suitably 3 to 300 bar. The reaction mixture enters the flash separator through an inlet located at the upper part of the flash separator for feeding the reaction mixture wherein the inlet has an enhanced mass transfer surface area that is increased with at least 25% compared to an inlet in of same dimension in a shape of a pipe, suitably at least 50%, more suitably at least 200%. This can be done by baffles, plates or static mixer inside the flash separator. The inlet is separate from the flash separator. This simplifies for example service, cleaning and replacement. The reaction mixture travels downwards through the mixing elements into the flash separator while the gases which evaporate travel upwards. This facilitates the removal of volatile gases from the reaction mixture. The gaseous stream is typically withdrawn from the top of the flash separator, while the polymer stream is withdrawn from the bottom.

The flash separator has an inlet at the upper part thereof. The inlet has a mass transfer surface area. For the purposes of the present invention the mass transfer surface area of a closed construction, such as a pipe, is the surface area of the walls forming the construction which is in contact with the fluid flowing inside the construction. Thus, for a simple pipe the mass transfer area is the area of the internal wall of the pipe. A static mixer, on the other hand, has an internal wall structure which divides the flow within the mixer. For a static mixer the mass transfer surface area is then the entire surface area of the mixer, including the wall defining the mixer volume and the internal walls used for dividing the flow, which is in contact with the fluid.

According to the present invention the inlet has at least 25 % greater mass transfer surface area than a simple straight pipe having the same diameter and the same length as the inlet. In one embodiment the inlet is a static mixer whose internal wall structure increases the mass transfer surface area.

It is also possible to increase the mass transfer surface area by providing additional flow paths to the solution. Thus, according to another embodiment the pipe is provided with holes through which the fluid can exit the pipe. In such an assembly the increase of the mass transfer surface area for each hole then equals to the surface area of a sphere having the same diameter as the hole. The total increase of the mass transfer surface area is then the sum of the increases caused by each hole.

If the inlet has the shape of a non-circular cylinder then equivalent diameter is used in place of the diameter. As it is well known, the equivalent diameter is the diameter of the circle having the same area as the non-circular shape.

According to the present invention the reaction mixture can be fed to the flash separator through a static mixer. The feeding can be done by using one or more suitable nozzles which disperse the reaction mixture inside the static mixer into droplets. Such nozzles are well known in the industry and include air atomising nozzles, flat fan nozzles, hollow cone nozzles and full cone nozzles. Preferably the nozzles break the stream into droplets having the size of not less than about 0.2 mm, suitably not less than 1 mm.

The static mixer is a series of stationary motionless guiding mixing elements placed lengthwise in a pipe. By using such configuration the polymer melt-gas mass transfer surface area is increased. Another advantage of the invention is an increased residence time of the reaction mixture, providing more time for the components transfer to the gas phase.

The static mixer increases the mass transfer surface area of the reaction mixture. In one embodiment the mass transfer surface area of the static mixer is at least 1.5 bigger compared to the inside mass transfer surface area of a pipe with same dimensions as the static mixer of same dimensions, suitable at least 2 times bigger surface area. The mass transfer surface area of the static mixer is suitably at least 2 m², more suitably at least 3 m². This enhances the mass transfer of the volatile gases from the reaction mixture into the gaseous stream.

According to the present invention the gases are removed from the reaction mixture in at least one flashing step. It is thus possible to remove the volatile gases in two or more flashing steps where each flashing step is conducted in a dedicated flash separator. The first flash separator receives the reaction mixture stream and removes the bulk of volatile gases. The polymer stream is withdrawn from the flash separator and can be passed to a secondary flash separator, in which a further quantity of the gases is removed. As it is well understood by the person skilled in the art, the pressure in each downstream flash separator is less than in the upstream flash separator.

In the case of multiple flash separators any one or all of the flash separators may be arranged to operate according to the present invention. The inlet according to the present invention is however most advantageously in the first flash separator since the amount of volatile gases is the highest and the viscosity of the reaction mixture is the lowest. Thereby the solution flows relatively easily

When multiple flash separators are used for removing the volatile gases from the reaction mixture the polymer content in reaction mixture stream withdrawn from the first flash separator is typically from 35 to 99 wt%. The gases can be further removed in one or more downstream flash separators. In other words, the polymer stream withdrawn from the first flash separator comprise from 1 to 65 wt% of residual volatile gases.

When viewed from a different angle, the gaseous stream withdrawn from the first flash separator is from 35 to 90 wt% from the total material streams withdrawn from the bottom of flash separator, suitably 50 to 85 wt%. The gaseous stream typically comprises unreacted monomer, solvent, unreacted comonomer and any other gaseous components present in the reaction mixture.

By using the flash separator according to the present invention it is possible to achieve high separation efficiency for the components. For instance, the separation efficiency for volatile gases comprising unreacted monomer, such as ethylene, and also solvent, such as hydrocarbon solvent (as described above), and unreacted comonomer(s), such as alpha-olefins and polar comonomers, suitably octadiene (OD), vinyl acetate (VA), meth acrylates, in particular methyl acrylate (MA), ethyl acrylate (EA), butyl acrylate (BA), methyl methacrylate (MMA), acrylic acid (AA), methacrylic acid (MAA), vinyl tri methoxy silane (VTMS), vinyl tri ethoxy silane (VTES), glycidyl methacrylate (GMA), maleic anhydride (MAH), carbon monoxide, acrylamide, gamma-metha acryloxy propyl tri methoxy silane and/or gamma-metha acryloxy propyl tri ethoxy silane, is at least 75 wt% and preferably at least 80 wt%. The separation efficiency is defined as the mass flow of the component withdrawn in the gaseous stream divided by the (theoretical) mass flow rate of the component in the gaseous stream in equilibrium conditions.

It is possible to have more than two flashing steps and thus more than two flash separators downstream of the reactor for removing the volatile gases. However, this increases the investment and operating costs. Therefore it is preferred to conduct the flashing in one or two steps in one or two flash separators and especially it is preferred to conduct the flashing in two steps in two flash separators.

The residual volatile gases eventually remaining in the polymer after the downstream flash separator may be removed, as it is known in the art, by suitable venting arrangements in the extruder. In such methods volatile gases material is removed from the extruder via one or more vent ports. Venting is suitably combined with stripping by using, for instance, water, nitrogen or carbon dioxide as stripping gas. Venting of volatile gases material from the extruder is well known in the industry and is discussed, for instance, in the book of Chris Rauwendaal: "Polymer Extrusion", Carl Hanser Verlag, Munich 1986, in paragraphs 8.5.2 and 8.5.3.

Also other methods known in the art for removing the residual volatile gases from the polymer may be used. Such methods may be used instead of the above-mentioned methods of secondary flash and venting in an extruder, or alternatively they can be used in combination with either one or both of them.

The invention relates to a process for using the flash separator according to any previous embodiments. The pressure in the flash separator is suitably 1 bar to 500 bar, suitably 1.5 to 450 bar, more suitably 2 to 400 bar. The temperature in the high pressure separator is 100 to 400°C, suitably 130 to 300°C, more suitably 160 to 275°C.

The invention relates to the flash separator used in a solution polymerisation process or a high pressure polymerisation process as described above. The flash separator suitably is used for separating the olefin copolymer from unreacted monomers and at least one unreacted comonomer. The first outlet is used for a polymer stream comprising mainly the ethylene copolymer and the second outlet is used for gaseous stream comprising the recovered comonomers, more suitably the recovered monomers and comonomers, even more suitably the recovered monomers and comonomers, wherein the comonomers comprise alfa-olefin as described above or an alfa-olefin as described above.

According to one embodiment the reaction mixture comprises 3 to 35 wt% of olefin copolymer, suitably 10 to 30 wt%. Further the amount of comonomer in the reaction mixture can be above 1 wt%, suitably above 5 wt%, more suitable above 10 wt%.

In one embodiment the polymer stream in the first outlet comprises 35 to 99 wt% of olefin copolymer.

In another embodiment of the invention the olefin copolymer is an LDPE and the reaction mixture comprises ethylene and at least one polar comonomer as described above. The comonomer comprises at least one of alkyl-acrylate, of vinyl acetate and or vinyl silane.

In another embodiment the olefin copolymer is a plastomer, suitable an ethylene copolymer and produced in a solution process. Then the reaction mixture comprises ethylene, an alfa-olefin comonomer and a solvent.

### Examples

### Example 1 (Comparative)

In high pressure process a vinyl acetate ethylene copolymer is produced. From the reactor, a reaction mixture is withdrawn and fed into a flash separator at a rate of 17500 Kg/h. The example shows the separation efficiency and the gas outflow rate with a mass transfer surface area of 4.5 m² under typical operating conditions.

**Table 1: Flow rates and operating conditions for flash separator**

| Parameter | Value |
|---|---|
| Pressure (barg) | 200 |
| Temperature (°C) | 250 |
| Total feed flow rate (Kg/h) | 17500 |
| Ethylene mass fraction in the feed (%wt.) | 57 |
| Vinyl acetate mass fraction in the feed (%wt.) | 23 |
| Polymer mass fraction in the feed (%wt.) | 20 |
| Mass transfer surface area (m²) | 4.5 |
| Overall separation efficiency (%) | 45.8 |
| Volume of flash separator (m³) | 10 |

### Example 2

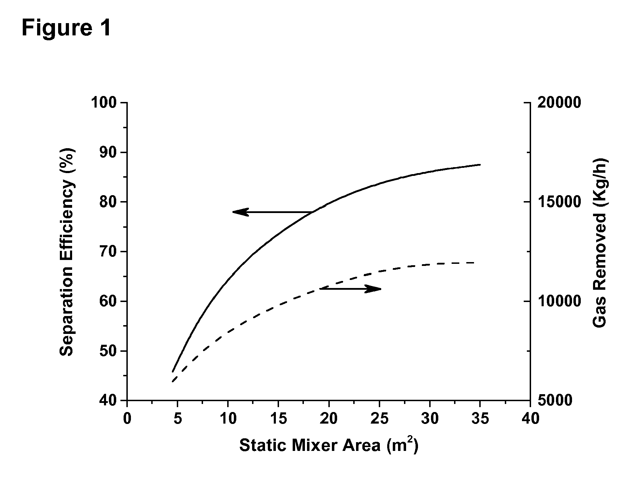

The process of Example 1 is repeated but the inlet of the flash is replaced with one having a greater mass transfer surface area. The separation efficiency as well as the gaseous stream flow rate coming out from the top (second stream) of the flash separator for various static mixer areas, i.e. various mass transfer surface areas are disclosed. The results are shown in Figure 1 where the separation efficiency and the flow rate of gas recovered from the flash are plotted as functions of the mass transfer surface area. It is evident that using the static mixer having around 25 m² area, the mass transfer of gaseous components from the liquid phase is substantially enhanced resulting in ∼ 92% increase in separation efficiency, i.e. from 45.8 % to 84 %, and additional recovery of 5450 kg/h gas from the gaseous stream at the top of the separator outlet stream (i.e. from 5950 Kg/h to 11400 Kg/h).

## Claims

1. A flash separator comprising
a. an inlet located at the upper part of the flash separator for feeding a reaction mixture comprising an olefin copolymer and a gaseous mixture of monomer and at least one unreacted comonomer,
b. a first outlet at the lower part of the flash separator, and
c. a second outlet at the top of the flash separator,
wherein the inlet has an enhanced mass transfer surface area that is increased with at least 25% compared to a simple straight pipe having the same diameter and the same length as the inlet.

2. The flash separator according to claim 1 wherein the inlet is a static mixer.

3. The flash separator according to claim 2 wherein the static mixer has mass transfer surface area of at least 2 m².

4. The process for separating hydrocarbons from a reaction solution comprising a polymer and said hydrocarbons comprising the steps of passing the reaction solution into the flash separator according to any one of claims 1 to 3; withdrawing a first solution comprising the majority of the polymer through the first outlet; and withdrawing a second solution comprising mainly hydrocarbons through the second outlet.

5. The process according to claim 4 wherein the pressure in the flash separator is from 1 to 500 bar.

6. The process according to claim 4 or claim 5 wherein the temperature in the flash separator is from 100 to 400°C.

7. The process according to one of the claims 4 to 6 wherein the polymer is an olefin copolymer.

8. The process according to claim 7 wherein the olefin copolymer comprises from 10 to 40 wt% of the reaction solution.

9. The process according to claim 8 wherein the amount of comonomer in the reaction solution is at least 1 wt%.

10. The process according to any one of the claims 4 to 9 comprising the step of heating the reaction solution introducing it into the flash separator.

11. The process according to any one of claims 4 to 10 comprising the step of reducing the pressure of the reaction solution before introducing it into the flash separator.

12. The process according to any one of claims 4 to 11 wherein the olefin copolymer is a low density polyethylene.

13. The process according to claim 12 wherein the reaction solution comprises ethylene and at least one polar comonomer.

14. The process according to claim 13 wherein the polar comonomer is selected from the group of alkyl-acrylates, of vinyl acetates, vinyl silanes and mixtures thereof.

15. The process according to any one of claims 7 to 11 wherein the olefin copolymer is produced in a solution process.

16. The process according to claim 15 wherein the reaction solution comprises an alfa-olefin.
